# EUROPEAN PATENT SPECIFICATION

(11) **EP 1 039 798 B1**
(45) Date of publication and mention of the grant of the patent: **09.04.2003**
(21) Application number: 98965922.2
(22) Date of filing: 18.12.1998
(51) Int. Cl.: A01J 5/08

(54) **A TEATCUP LINER DEVICE**
ZITZENGUMMIVORRICHTUNG
DISPOSITIF DE MANCHON TRAYEUR

(30) Priority: 19.12.1997 SE 9704791
(43) Date of publication of application: 04.10.2000
(73) Proprietor: DeLaval Holding AB, 147 21 Tumba (SE)
(72) Inventor: SCHLAISS, Günter, S-146 36 Tullinge (SE); SCHULTE, Klaus, S-150 21 Mölnbo (SE); ÄLVEBY, Nils, S-117 50 Stockholm (SE)
(74) Representative: Berglund, Stefan
(86) International application number: SE9802392
(87) International publication number: WO99034664

(56) References cited:
- EP-A1- 0 088 580
- EP-A1- 0 277 396
- EP-A1- 0 543 463
- EP-A2- 0 801 893
- US-A- 1 249 134
- US-A- 1 896 321

## Description

### THE BACKGROUND OF THE INVENTION AND PRIOR ART

The present invention refers to a teatcup liner device which is arranged to be disposed in a teatcup shell of a teatcup in such a way that a pulsation chamber is formed between the teatcup liner device and the teatcup shell and which comprises a teatcup liner, defining an inner space and comprising an upper end portion, with an inlet passage extending to the inner space, and a lower end portion, wherein the teatcup liner is arranged to receive a teat which extends through the inlet passage into the inner space. The invention also refers to a mould for manufacturing a teatcup liner, as well as a method for manufacturing a teatcup liner.

In accordance with the legislation in many countries, the foremilk, e.g. the first proportionately small amount of milk, which is received in the beginning of each milking operation, is to be separated from the latter main milk flow. The reason for separating the foremilk is that it usually contains micro-organisms which grow in the teat canal and which brought by the foremilk out of the teat, which consequently results in the fact that main milk flow which follows the foremilk is substantially free from these micro-organisms. Consequently, the foremilk has a lower quality than the milk in the main flow and therefore it is desired to prevent the foremilk from being contained in the milk which is to be delivered to, for example a dairy. Furthermore, it is desirable to have a possibility to discover if the cow is infected by for example mastitis, which one can establish if the foremilk contains bacteria or micro-organisms in an impermissibly high concentration, and in this case, separate all milk from this cow.

However, such a separation of the foremilk is a difficult and complicated working operation, which usually is manually performed by the milker by simply milking and collecting the first milk amount. Due to the difficulty of separating the foremilk, one has in connection with automatic milking often simply omitted to do this and accepted a lower quality of the delivered milk. Such a method is not satisfactory.

WO 97/18701 shows a device comprising a teatcup and a milk conduit, which extends from the teatcup and is arranged to transport the milk from the teatcup to a collecting member. The milk conduit comprises an additional container and a connecting member which is arranged to discharge the foremilk to the additional container and thereby transport the following main milk flow past the additional container and to the collecting member. In this case, the separation of the foremilk takes place relative far away from the teatcup, i.e. the foremilk and the main milk are transported in a common milk conduit, and therefore there is a risk of mixing rests of the foremilk with the main milk. Moreover, the connecting member shown should only have the intended function in a horizontal orientation.

SU-A-1 349 735 shows a teatcup with an inner space which is connectable to one of two outlet passages by means of a valve member. The device shown has a complicated construction which results in a difficult and expensive manufacturing.

US-A-4 648 350 shows different embodiments of valve members which are disposed at a lower end of an inner space of a teatcup and which aim at closing the connection between the inner space and the milk conduit when the pressure in the inner space rises to the atmospheric pressure.

SE-B-373 727 shows a one-way valve which is arranged to be disposed in a milk conduit between a teatcup and a teatcup claw and which aims at preventing the so-called "back-flush", e.g. that milk is sucked back into the teatcup and hits the teat which is contained therein.

### SUMMARY OF THE INVENTION

The object of the present invention is to achieve a teatcup liner, which enables separation of the foremilk in a simple way. Furthermore, the teatcup liner is to be easy to manufacture and possible to use in connection with automatic milking, i.e. to enable automatic separation of the foremilk.

This object is achieved by the initially defined teatcup liner device which is characterized in that the lower end portion of the teatcup liner forms two outlet passages which extend from the inner space and are arranged to discharge milk from the inner space.

By such a teatcup liner it is possible, already in the inner space of the teatcup liner, to divide the milk flow in two different flow directions and consequently provide a separate foremilk flow away from the inner space of the teatcup liner through a first outlet passage. Thereafter, the main milk flow may be transported through the second outlet passage. Thereby, it is possible to avoid that the rest of foremilk will be mixed with the main milk flow. By such a teatcup liner it is also possible to achieve a separation without the need of a number of different components to be provided downstream the teatcup, i.e. the total height of a teatcup with a teatcup liner according to the invention becomes low.

According to an embodiment of the invention, the teatcup liner is manufactured in one single piece. Thereby, a simple manufacturing of the teatcup is possible, for example by means of an injection moulding process. In this case, the teatcup liner is advantageously formed of a rubber-like material.

According to a further embodiment of the invention, the lower end portion of the teatcup liner comprises two hose-like outlet portions, wherein each such outlet portion forms one of said outlet passages. Also a teatcup liner with two such outlet portions may be manufactured in a simple manner.

According to a further embodiment of the invention, the teatcup liner comprises a valve device which is arranged to provide at least a substantially closed or a substantially open state of at least one of said outlet passages. By such a valve device, it is possible in a simple way to direct the milk flow to one of the two outlet passages. Therein, means may advantageously be arranged to enable automatic control of the valve device to any one of said states. In this way, the foremilk may be automatically separated at each milking occasion.

According to a further embodiment of the invention, the valve device comprises a valve which is arranged to open the outlet passage in question at least when the pressure in the inner space substantially exceeds the pressure in the outlet passage in question. Such a valve device may in a simple way be realised with a common one-way valve and be controlled by means of the vacuum, i.e. low sub-pressure, which is available in conventional milking machines.

According to a further embodiment of the invention, the valve device comprises a valve which has a valve body for each outlet passage and which is arranged to be pivotable from a rest position, in which the two valve bodies are located at a distance from a valve seat of the respective outlet passage. Therein, the valve may be arranged to be pivotable from said rest position against the action of a restoring spring force and one of said valve bodies be arranged to be brought to abutment against one of said valve seats, wherein an outlet passage, associated with the other valve seat is open. Also such a valve device is automatically adjustable by means of said vacuum.

According to a further embodiment of the invention, the valve device comprises a unit which is insertable into the inner space to abutment against a stop member at the lower end portion.

According to a further embodiment of the invention the teatcup liner device comprises at least one flexible conduit portion, which extends from or forms the outlet passage in question, wherein the valve device is arranged to provide said substantially closed state by a compression of the conduit portion in question. In such a way, a valve device may be provided without the need of any components to be provided in the inner space of the teatcup liner or in the outlet passages themselves. Thereby, the teatcup liner device is easier to keep clean from milk rests and possible accumulations of micro-organisms. According to an alternative, said conduit portion may be enclosed in a chamber and the valve device may comprise means which are arranged to raise the pressure in said chamber above the pressure level in the outlet passage in such a way that said compression is provided. In this way, the valve function aimed at may be controlled by means of a vacuum and be provided without any movable components in the proximity of the teatcup itself, which is subjected to shocks and hard treatment in connection with the milking. According to another alternative, the valve device may comprise a member with two parts, which are provided at different sides of the flexible conduit portion and at least one part of which is displaceable towards the other part in such a way that the flexible conduit portion is compressed. Therein, at least one of said parts may advantageously comprise a memory metal and the valve device may comprise a heating member, which is arranged to provide said displacement by heating of the memory metal.

The object mentioned above is also achieved by the initially defined mould for the manufacture of a teatcup liner, wherein the mould comprises an outer mould with a cavity which corresponds to the outer contour of the teatcup, a first core part with an outer contour which corresponds to the contour of the inner space, and two further core parts, each of which corresponds to the contour of one of the outlet passages. By such a mould a teatcup liner in accordance with the present invention may be manufactured in a simple and price worthy way. The two further core parts, which may form two separate units, are advantageously arranged to be connectable with the first core part. Such a connection may be provided by the insertion of the two further core parts into a respective recess of the first core part.

The object mentioned above is also achieved by the initially defined method, which comprises the steps:
assembly of a mould which comprises an outer mould, with a cavity which corresponds to the outer contour of the teatcup liner, a first core part, with an outer contour which corresponds to the contour of the inner space, and two further core parts, each of which corresponds to the outer contour of one of the outlet passages,
injection of a rubber-like material into the mould, and
disassembly of the mould and removal of the teatcup liner, wherein the first core part is pulled in a first direction and the two further core parts are pulled in an essentially opposite second direction.

### BRIEF DESCRIPTION OF THE DRAWINGS

The present invention is now to be explained more closely by means of different embodiments and with reference to drawings attached, in which
- Fig 1: shows a sectional side view of a teatcup liner device according to a first embodiment of the invention.
- Fig 2: shows a sectional side view of the teatcup liner device according to a second embodiment of the invention with a valve device in a first operating position.
- Fig 3: shows a sectional side view of the teatcup liner device in Fig 2 with the valve device in a second operating position.
- Fig 4: shows a view from below of the valve device in Figs 2 and 3.
- Fig 5: shows a sectional side view of a teatcup liner device according to a third embodiment.
- Fig 6: shows a sectional side view of a teatcup liner device according to a fourth embodiment of the invention.
- Fig 7: shows another sectional view of the teatcup liner device in Fig 6.
- Fig 8: shows a sectional side view of a teatcup liner device according to a fifth embodiment of the invention.
- Fig 9: shows a view from below of a valve member of the teatcup liner device in Fig 8.
- Fig 10: shows a view of a mould for moulding of a teatcup liner.

### DETAILED DESCRIPTION OF DIFFERENT EMBODIMENTS OF THE INVENTION

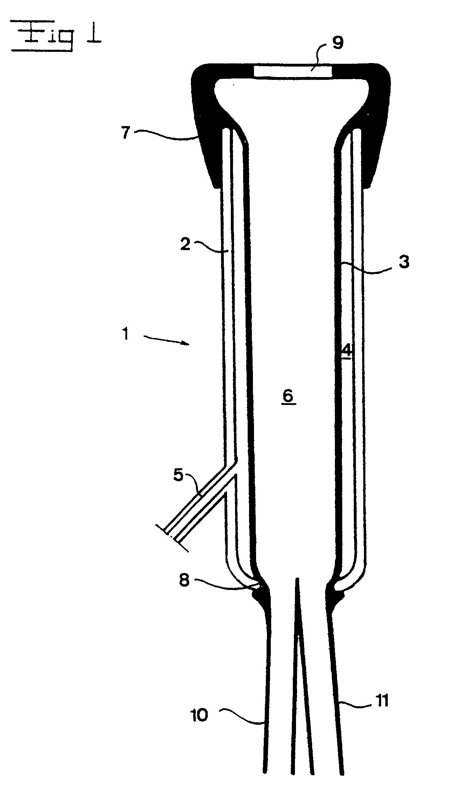

Fig 1 shows a first embodiment with a teatcup 1 which comprises a teatcup shell 2 and a teatcup liner 3 which is disposed in the teatcup shell 2 in such a way that a pulsation chamber 4 is formed between the teatcup liner 3 and the teatcup shell 2. The pulsation chamber 4 is, in a manner known per se, arranged to receive a cyclically alternating pressure level from a pulsator and a vacuum pump (not shown) via a pulse conduit 5. The pressure level may for example vary between atmospheric pressure and a sub-pressure of about 50 kPa. Consequently, the teatcup liner 3 will provide a pulsating movement in such a way that it cyclically expands and retracts. The teatcup liner 3 defines an inner space 6 and comprises an upper end portion 7 and a lower end portion 8. At the upper end portion 7 an inlet passage 9 is arranged, which extends into the inner space 6 and through which a teat is intended to be insertable into the teatcup 1 and the inner space 6 of the teatcup liner 3. The lower end portion 8 of the teatcup liner 3 comprises two hose-like outlet portions or outlet conduits 10 and 11, each of which forms an outlet passage which extends from the inner space 6 and is arranged to discharge milk from the inner space 6. It is to be noted that the outlet conduits 10 and 11 may have a considerable length and for example extend all the way to a teatcup claw or any other milk collecting member (not shown), or be short and essentially only be constituted by an opening through the wall of the lower end portion 8 of the teatcup liner 3, wherein each of these openings is arranged to be connected to a separate conduit member. The teatcup liner 3, with said outlet passages and with or without the outlet conduits 10, 11 are advantageously manufactured of a single continuous piece of a rubber-like material.

A first of the outlet conduits 10 may be arranged to discharge the foremilk, i.e. the first quantity of milk being received in connection with a milking operation, to a special collecting member for the latter and the second outlet conduit 11 may be arranged to discharge the main milk flow to the milk collecting member which usually constitute a part of a milking plant. The milk collecting member for the foremilk may also advantageously comprise equipment for analysing the quality of the milk, for example if it contains impermissibly high concentrations of bacteria or other micro-organisms. It is also to be noted that the outlet conduits 10 and 11 not necessarily need to have the same dimension, for example the outlet conduit 10 for the foremilk may have a smaller cross-sectional diameter than the outlet conduit 11 for the main milk flow.

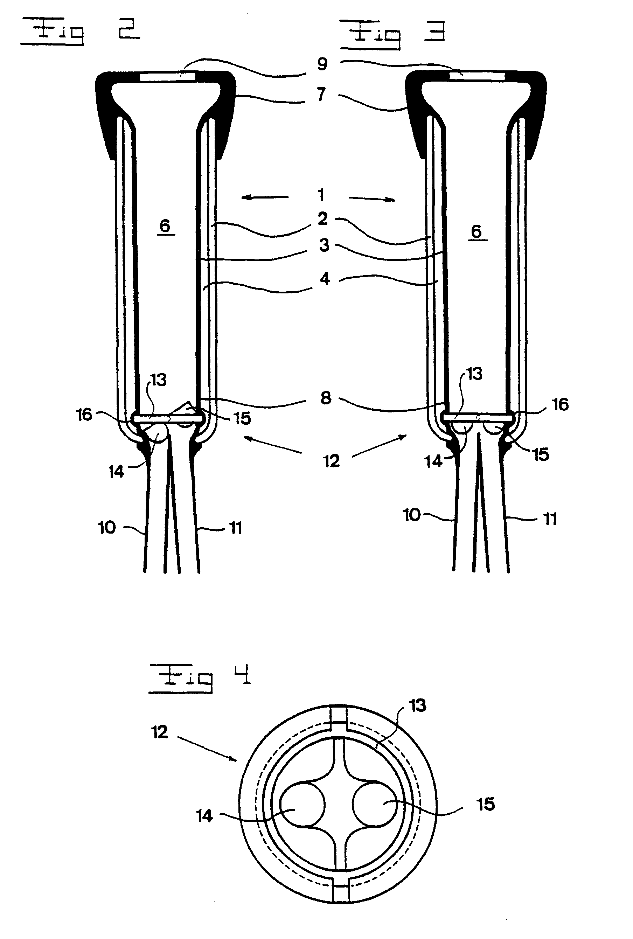

Means, for example in the form of a valve device, may be provided either directly on the outlet conduits 10 and 11 or on conduits connectable to the latter in order to close ore open each of the outlet passages of the outlet conduits 10 and 11, respectively, in order to control the milk flow to either the one or the other outlet passage. Examples of such valve devices will now be explained with reference to Figs 2 - 9. It is to be noted that components, which have substantially the same function in the different embodiments, have been provided with the same reference signs. For the sake of simplicity the pulse conduit 5 have been omitted in Figs 2 - 4 and 6 - 9.

Figs 2 - 4 show a second embodiment which differs from the first embodiment in that such a valve device mentioned above has been arranged in the inner space 6 at the lower end portion 8 of the teatcup liner 3. The valve device 12 comprises a valve which is arranged to be pivotable in an annular member 13 and which comprises two valve bodies 14 and 15, which are arranged to be able to abut a respective valve seat, which is formed by the outlet passage of the respective outlet conduit 10 and 11. In Fig 3 the valve is shown in a rest position in which the two valve bodies 14 and 15 are located at substantially the same distance from the respective valve seat. The valve is arranged to take said rest position by means of a spring member not shown and be pivotable from the rest position against the action of a restoring spring force of the spring member. In Fig 2 the valve is shown in one of two possible end positions, in which the valve body 14 abuts the valve seat of the outlet passage of the outlet conduit 10. In this end position, the outlet passage of the outlet conduit 11 is open and milk may flow from the inner space 6 out through the outlet passage of the outlet conduit 11 to the milk collecting member. If the same pressure prevails in the inner space 6 and the outlet passages of the outlet conduits 10, 11 the valve will be positioned in the rest position shown in Fig 3. If a sub-pressure is generated in the outlet passage of the outlet conduit 10 the valve body 14 will be displaced to abutment against the valve seat of the outlet conduit 10 and consequently close this outlet passage. When this end position has been reached and a sub-pressure is generated in the other outlet passage of the outlet conduit 11, the valve will remain in the end position shown in Fig 2 because the distance between the valve body 15 and its valve seat is so large that the tractive force, generated by the sub-pressure in the outlet passage of the outlet conduit 11, is not large enough to raise the valve body 14 from its valve seat. Consequently, the outlet passage of the outlet conduit 11 may be kept open for a milk flow as long as there is a sub-pressure in the outlet passage of the outlet conduit 10.

Consequently, by adjusting the pressure level in the two outlet passages it is possible to control the valve to a desirable end position.

Such as is shown in Fig 2 - 4, the annular member 13 and the valve bodies 14, 15 of the valve device 12 form a unit which is insertable into the inner space 6 of the teatcup liner 3 through the inlet passage 9 to abutment against a stop member 16 in the form of an annular recess at the lower end portion 8.

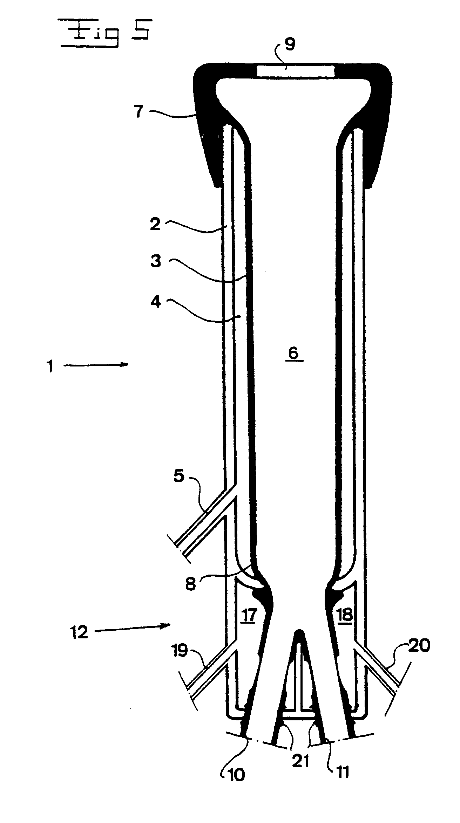

Fig 5 shows a third embodiment with a valve device which is arranged to cause a closing of the outlet passages of the outlet conduits 10, 11 by a compression of the outlet conduit 10, 11 in question. In the embodiment shown in Fig 5 this compression of the outlet conduits 10, 11, which constitute a part of the teatcup liner 3, is provided but it is also possible to provide such a valve device 12 in the conduit portion, which is connected to a respective outlet passage of the teatcup liner 3. In the embodiment shown, each of the outlet conduits 10, 11 is enclosed in a chamber 17 and 18, respectively, which via connecting nipples 19, 20 are connected to means, which are arranged to generate a desirable pressure level in the respective chamber 17, 18. By raising the pressure level in for example the chamber 17 above the level which prevails in the inner space 6 and the outlet passage of the outlet conduit 10, the part of the outlet conduit 10 which is located in the chamber 17 will be compressed or collapse in a way which corresponds the way in which a teatcup liner collapses during each pulsation cycle. By such a collapse or compression, the outlet passage of the outlet conduit 10 will be closed and thereby a milk flow is prevented from passing through this outlet passage. In order to facilitate the compression of the outlet conduits 10, 11, at least a part of the walls of the outlet conduits 10, 11 in respective chamber 17, 18 may, as is shown in Fig 5, be thinner in comparison with the walls of the outlet conduits 10, 11 outside the chambers 17, 18. It is to be noted that the outlet conduits 10, 11 may be provided with surrounding beads 21 in the area where the outlet conduits 10, 11 pass through the walls of the chambers 17, 18 in order to provide a leak-proof seal around the outlet conduits 10, 11.

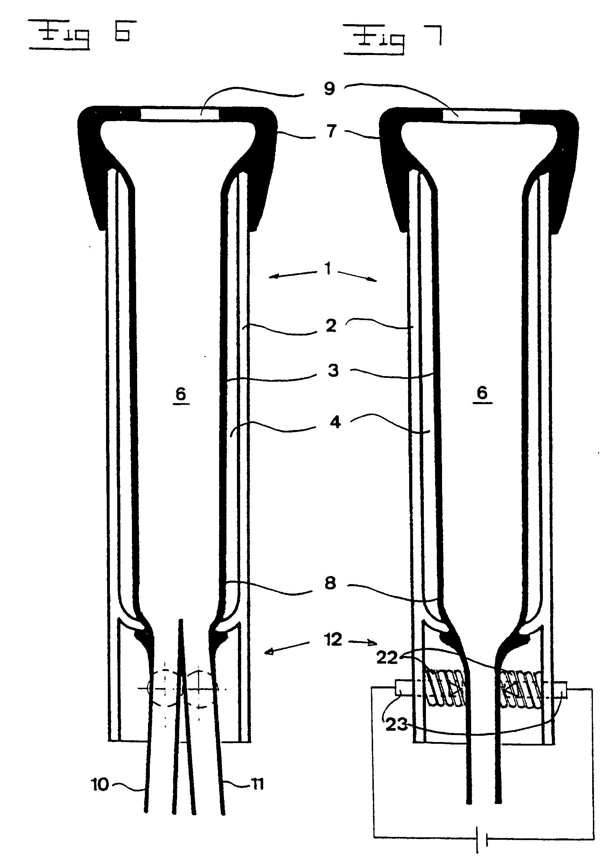

Figs 6 and 7 shows a fourth embodiment in which the valve device 12 comprises a member with two parts, in the form of memory metal elements 22, one for each outlet conduit 10, 11. The memory metal elements 22 in the shown embodiment are designed as helical spring elements and abut with an outer end an inner wall of a chamber housing the memory metal elements 22. The chamber is formed by a collar-like extension of the teatcup shell 2. Each such memory metal element or helical spring element 22 comprises an electrical heating member 23, which according to the embodiment shown in Figs 6, 7 is centrally arranged in the helical spring element 22. By conducting a current through the heating member 23 an extension of the memory metal elements 22 may be provided in order to displace these in a direction towards each other and to compress the outlet conduit 10 and 11, respectively, located therebetween. It is to be noted that the heating of the memory metal elements 22 also may be provided by conducting a current through the memory metal elements 22 themselves, i.e. the memory metal element 22 also form the heating members. Furthermore, it is also possible to replace the memory metal elements by other mechanical drive members, for example electromagnets.

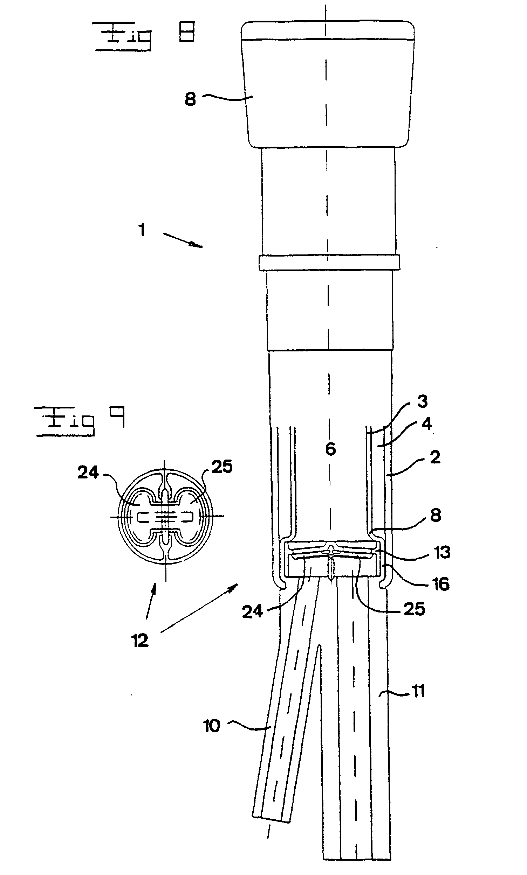

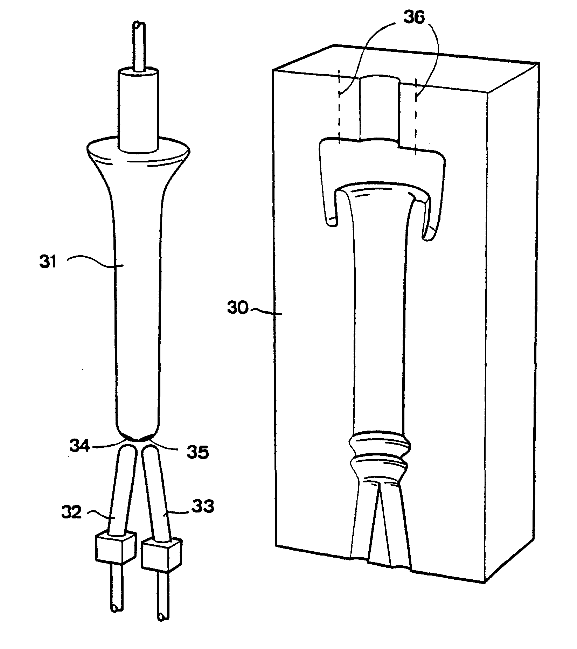

Figs 8 and 9 shows a fifth embodiment with a valve device 12 which comprises an one-way valve 24, 25 for each outlet passage. Each one-way valve 24, 25 is arranged to open the outlet passage in question when the pressure in the inner space 6 substantially exceeds the pressure in the outlet passage in question. Also in this case the valve device 12 forms a unit which is insertable into the inner space 6 of the teatcup liner 3 to abutment against a stop member 16 at the lower end portion 8.

Fig 10 shows a mould for the manufacture of the teatcup liner which is shown in Figs 1 - 8. The mould comprises a two-piece outer mould 30, only one part 30 of which is shown in Fig 10. However, it is to be noted that the two pieces 30 of the outer mould are substantially identical. The outer mould 30 forms a cavity which corresponds to the outer contour of the teatcup liner 3. Furthermore, the mould comprises a first core part 31 with an outer contour which corresponds to the inner contour of the inner space 6 of the teatcup liner 3. In addition, the mould comprises two further core parts 32, 33 which each corresponds to the inner contour of an outlet conduit 10 and 11, respectively. The two further core parts 32, 33 are connected to the first core part 31 by being insertable in a respective recess 34, 35 of the first core part 31. Furthermore, the mould comprises inlet members 36, schematically indicated, for injection of the rubber material of which the teatcup liner 3 is to be manufactured.

The manufacture of a teatcup liner 3 is performed in such a manner that the mould is assembled, wherein the two further core parts 32, 33 are inserted in its respective recess 34, 35 in the first core part 31. Thereafter, the core parts are placed in the cavity in one piece of the outer mould 30 whereafter the other piece is applied. Thereafter, the rubber material is injected into the mould through the inlet members 36 and after a suitable time period the mould is pulled apart and the teatcup liner 3 is removed from the outer mould 30 and the core parts 31, 32, 33 by the first core part being pulled in a first direction and the two further core parts 32, 33 being pulled in a substantially opposite direction.

The invention is not limited to the embodiments described above but may varied and modified within the scope of the following claims.

## Claims

1. A teatcup liner device which is arranged to be disposed in a teatcup shell (2) of a teatcup (1) in such a way that a pulsation chamber (4) is formed between the teatcup liner device and the teatcup shell (2) and which comprises a teatcup liner (3), defining an inner space (6) and comprising an upper end portion (7), with an inlet passage (9) extending to the inner space (6), and a lower end portion (8), wherein the teatcup liner (3) is arranged to receive a teat which extends through the inlet passage (9) into the inner space (6), **characterized in that** the lower end portion (8) of the teatcup liner (3) forms two outlet passages (10, 11) which extend from the inner space (6) and are arranged to discharge milk from the inner space (6).

2. A teatcup liner device according to claim 1, **characterized in that** the teatcup liner (3) is manufactured in one single piece.

3. A teatcup liner device according to any one of claims 1 and 2, **characterized in that** the teatcup liner (3) is manufactured in a rubber-like material.

4. A teatcup liner device according to any one of the preceding claims, **characterized in that** the lower end portion (8) of the teatcup liner (3) comprises two hose-like outlet portions (10, 11), wherein each such outlet portion forms one of said outlet passages.

5. A teatcup liner device according to any one of the preceding claims, **characterized by** a valve device (12) which is arranged to provide at least a substantially closed or a substantially open state of at least one of said outlet passages (10, 11).

6. A teatcup liner device according to claim 5, **characterized by** means which are arranged to enable automatic control of the valve device (12) to any one of said states.

7. A teatcup liner device according to any one of claims 5 and 6, **characterized in that** the valve device (12) comprises a valve (24, 25) which is arranged to open the outlet passage in question at least when the pressure in the inner space (6) substantially exceeds the pressure in the outlet passage (10, 11) in question.

8. A teatcup liner device according to any one of claims 5 and 6, **characterized in that** the valve device (12) comprises a valve which has a valve body (14, 15) for each outlet passage (10, 11) and which is arranged to be pivotable from a rest position, in which the two valve bodies (14, 15) are located at a distance from a valve seat of the respective outlet passage (10, 11).

9. A teatcup liner device according to claim 8, **characterized in that** the valve (14, 15) is arranged to be pivotable from said rest position against the action of a restoring spring force.

10. A teatcup liner device according to claim 9, **characterized in that** one of said valve bodies (14, 15) is arranged to be brought to abutment against one of said valve seats, wherein the outlet passage (10, 11) associated with the other valve seat is open.

11. A teatcup liner device according to any one of claims 5 to 10, **characterized in that** the valve device comprises a unit (13) which is insertable into the inner space (6) to abutment against a stop member (16) at the lower end portion (8).

12. A teatcup liner device according to any one of claims 5 and 6, **characterized by** at least one flexible conduit portion (10, 11), which extends from or forms the outlet passage in question, wherein the valve device (12) is arranged to provide said substantially closed state by a compression of the conduit portion (10, 11) in question.

13. A teatcup liner device according to claim 12, **characterized in that** said conduit portion (10, 11) is enclosed in a chamber (17, 18), and that the valve device (12) comprises means (19, 20) which are arranged to raise the pressure level in said chamber (17, 18) above the pressure level in the outlet passage (10, 11) in such a way that said compression is produced.

14. A teatcup liner device according to claim 12, **characterized in that** the valve device (12) comprises a member with two parts (22) which are provided at different sides of the flexible conduit portion (10, 11) and at least one part (22) of which is displaceable towards the other part (22) in such a way that the flexible conduit portion is compressed.

15. A teatcup liner device according to claim 14,
**characterized in that** at least one of said parts (22) comprises a memory metal and that the valve device (12) comprises a heating member (23) which is arranged to provide said displacement by heating of the memory metal.

16. A mould for manufacturing a teatcup liner (3) which defines an inner space (6) and comprises an upper end portion (7), with an inlet passage (9) which extends to the inner space, and a lower end portion (8), which forms two outlet passages (10, 11) which extend from the inner space, wherein the mould comprises
an outer mould (30) with a cavity which corresponds to the outer contour of the teatcup,
a first core part (31) with an outer contour which corresponds to the contour of the inner space (6), and
two further core parts (32, 33) each of which corresponds to the contour of one of the outlet passages (10, 11).

17. A mould according to claim 16, **characterized in that** the two further core parts (32, 33) are arranged to be connectable with the first core part (31).

18. A mould according to claim 17, **characterized in that** the two further core parts (32, 33) are insertable in a respective recess (34, 35) of the first core part (31).

19. A method for manufacturing a teatcup liner which defines an inner space and comprises an upper end portion, with an inlet passage which extends to the inner space, and a lower end portion, which forms two outlet passages which extend from the inner space, comprising the steps:
assembly of a mould which comprises an outer mould, with a cavity which corresponds to the outer contour of the teatcup liner, a first core part, with an outer contour which corresponds to the contour of the inner space, and two further core parts, each of which corresponds to the outer contour of one of the outlet passages,
injection of a rubber-like material into the mould, and
disassembly of the mould and removal of the teatcup liner, wherein the first core part is pulled in a first direction and the two further core parts are pulled in an essentially opposite second direction.

## Patentansprüche

1. Zitzengummivorrichtung, die auf eine solche Weise im Zitzenbechergehäuse (2) eines Zitzenbechers (1) angeordnet wird, daß eine Pulskammer (4) zwischen der Zitzengummivorrichtung und dem Zitzenbechergehäuse (2) gebildet wird, und die einen Zitzengummi (3) umfaßt, der einen Innenraum (6) definiert und einen oberen Endabschnitt (7) mit einem Einlaßdurchgang (9), der sich zum Innenraum (6) erstreckt, umfaßt sowie einen unteren Endabschnitt (8), wobei der Zitzengummi (3) zum Aufnehmen einer Zitze dient, die sich durch den Einlaßdurchgang (9) in den Innenraum (6) hinein erstreckt, **dadurch gekennzeichnet, daß** der untere Endabschnitt (8) des Zitzengummis (3) zwei Auslaßdurchgänge (10, 11) bildet, die sich vom Innenraum (6) erstrecken und zur Ausgabe der Milch aus dem Innenraum (6) dienen.

2. Zitzengummivorrichtung nach Anspruch 1, **dadurch gekennzeichnet, daß** der Zitzengummi (3) aus einem einzigen Stück hergestellt wird.

3. Zitzengummivorrichtung nach einem der Ansprüche 1 und 2, **dadurch gekennzeichnet, daß** der Zitzengummi (3) aus einem gummiartigen Material hergestellt wird.

4. Zitzengummivorrichtung nach einem der vorangegangenen Ansprüche, **dadurch gekennzeichnet, daß** der untere Endabschnitt (8) des Zitzengummis (3) zwei schlauchartige Auslaßabschnitte (10, 11) umfaßt, wobei jeder der Auslaßabschnitte einen der Auslaßdurchgänge bildet.

5. Zitzengummivorrichtung nach einem der vorangegangenen Ansprüche, **gekennzeichnet durch** eine Ventilvorrichtung (12), die dazu dient, mindestens einen im wesentlichen geschlossenen oder einen im wesentlichen offenen Zustand mindestens eines der Auslaßdurchgänge (10, 11) herzustellen.

6. Zitzengummivorrichtung nach Anspruch 5, **gekennzeichnet durch** eine Einrichtung, die zur automatischen Steuerung der Ventilvorrichtung (12) in einen der Zustände dient.

7. Zitzengummivorrichtung nach einem der Ansprüche 5 und 6, **dadurch gekennzeichnet, daß** die Ventilvorrichtung (12) ein Ventil (24, 25) umfaßt, das zum Öffnen des in Frage stehenden Auslaßdurchganges dient, mindestens wenn der Druck im Innenraum (6) wesentlich den Druck im in Frage stehenden Auslaßdurchgang (10, 11) übersteigt.

8. Zitzengummivorrichtung nach einem der Ansprüche 5 und 6, **dadurch gekennzeichnet, daß** die Ventilvorrichtung (12) ein Ventil umfaßt, das einen Ventilkörper (14, 15) für jeden Auslaßdurchgang (10, 11) aufweist und so angeordnet ist, daß es aus einer Ruheposition schwenkbar ist, in der die beiden Ventilkörper (14, 15) in einem Abstand von einem Ventilsitz des jeweiligen Auslaßdurchgangs (10, 11) angeordnet sind.

9. Zitzengummivorrichtung nach Anspruch 8, **dadurch gekennzeichnet, daß** das Ventil (14, 15) so angeordnet ist, daß es in der Ruheposition gegen die Arbeit einer Federrückstellkraft schwenkbar ist.

10. Zitzengummivorrichtung nach Anspruch 9, **dadurch gekennzeichnet, daß** einer der Ventilkörper (14, 15) so angeordnet ist, daß er in Anschlag gegen einen der Ventilsitze gebracht werden kann, wobei der Auslaßdurchgang (10,11), der dem anderen Ventilsitz zugeordnet ist, geöffnet ist.

11. Zitzengummivorrichtung nach einem der Ansprüche 5-10, **dadurch gekennzeichnet, daß** die Ventilvorrichtung eine Einheit (13) umfaßt, die bis zum Anstoßen an ein Stoppelement (16) am unteren Endabschnitt (8) in den Innenraum (6) einsetzbar ist.

12. Zitzengummivorrichtung nach einem der Ansprüche 5 und 6, **gekennzeichnet durch** mindestens einen flexiblen Leitungsabschnitt (10, 11), der sich vom in Frage stehenden Auslaßdurchgang erstreckt oder diesen bildet, wobei die Ventilvorrichtung (12) dazu dient, den im wesentlichen geschlossenen Zustand **durch** eine Kompression des in Frage stehenden Leitungsabschnittes (10, 11) herzustellen.

13. Zitzengummivorrichtung nach Anspruch 12, **dadurch gekennzeichnet, daß** der Leitungsabschnitt (10, 11) von einer Kammer (17, 18) umschlossen ist und daß die Ventilvorrichtung (12) eine Einrichtung (19, 20) umfaßt, die dazu dient, den Druckpegel in der Kammer (17, 18) über den Druckpegel im Auslaßdurchgang (10, 11) in einer solchen Weise anzuheben, daß die Kompression erzeugt wird.

14. Zitzengummivorrichtung nach Anspruch 12, **dadurch gekennzeichnet, daß** die Ventilvorrichtung (12) ein Element mit zwei Teilen (22) umfaßt, die an unterschiedlichen Seiten des flexiblen Leitungsabschnittes (10, 11) vorgesehen sind, und daß mindestens ein Teil (22) auf eine solche Weise zum anderen Teil (22) verschiebbar ist, daß der flexible Leitungsabschnitt zusammengedrückt wird.

15. Zitzengummivorrichtung nach Anspruch 14, **dadurch gekennzeichnet, daß** mindestens einer der Teile (22) ein Gedächtniseffekt-Metall umfaßt und daß die Ventilvorrichtung (12) ein Heizelement (23) umfaßt, das dazu dient, die Verschiebung durch Erhitzen des Gedächtniseffekt-Metalls zu bewirken.

16. Form zum Herstellen eines Zitzengummis (3), der einen Innenraum (6) definiert und einen oberen Endabschnitt (7) mit einem Einlaßdurchgang (9), der sich zum Innenraum erstreckt, umfaßt sowie einen unteren Endabschnitt (8), der zwei Auslaßdurchgänge (10, 11) bildet, die sich vom Innenraum erstrekken, wobei die Form
eine Außenform (30) mit einem Hohlraum umfaßt, der dem Außenumriß des Zitzenbechers entspricht, sowie
einen ersten Kernteil (30) mit einem Außenumriß, der dem Umriß des Innenraumes (6) entspricht, und
zwei weitere Kernteile (32, 33), von denen jeder dem Umriß eines der Auslaßdurchgänge (10, 11) entspricht.

17. Form nach Anspruch 16, **dadurch gekennzeichnet, daß** die beiden weiteren Kernteile (32, 33) dazu dienen, mit dem ersten Kernteil (31) verbunden zu werden.

18. Form nach Anspruch 17, **dadurch gekennzeichnet, daß** die beiden weiteren Kernteile (32, 33) in eine jeweilige Vertiefung (34, 35) des ersten Kernteiles (31) einsetzbar sind.

19. Verfahren zum Herstellen eines Zitzengummis, der einen Innenraum definiert und einen oberen Endabschnitt mit einem Einlaßdurchgang, der sich in den Innenraum erstreckt, umfaßt sowie einen unteren Endabschnitt, der zwei Auslaßdurchgänge bildet, die sich vom Innenraum erstrecken, umfassend die folgenden Schritte:
Zusammensetzen einer Form, die eine Außenform mit einem Hohlraum, der dem Außenumriß des Zitzengummis entspricht, umfaßt sowie einen ersten Kernteil mit einem Außenumriß, der dem Umriß des Innenraumes entspricht, und zwei weitere Kernteile, von denen jeder dem Außenumriß eines der Auslaßdurchgänge entspricht,
Spritzen eines gummiartigen Materials in die Form, und
Auseinandernehmen der Form und Entfernen des Zitzengummis, wobei der erste Kernteil in eine erste Richtung gezogen wird und die beiden weiteren Kernteile in eine im wesentlichen entgegengesetzte zweite Richtung.

## Revendications

1. Système de manchon-trayeur qui est agencé pour être disposé dans une enveloppe de gobelet-trayeur (2) d'un gobefet-trayeur (1) de telle sorte qu'une chambre à pulsations (4) soit formée entre le système de manchon-trayeur et l'enveloppe de gobelet-trayeur (2) et qui comprenne un manchon-trayeur (3) définissant un espace intérieur (6) et comprenant une partie supérieure extrême (7), avec un passage dentrée (9) disposé vers l'espace intérieur (6), et une partie inférieure extrême (8), où le manchon-trayeur (3) est agencé pour recevoir un trayon qui passe par le passage d'entrée (9) pour pénétrer dans l'espace intérieur (6), **caractérisé en ce que** la partie inférieure extrême (8) du manchon-trayeur (3) forme deux passages de sortie (10, 11) qui sont disposés à partir de l'espace intérieur (6) et sont agencés pour décharger le lait de l'espace intérieur (6).

2. Système de manchon-trayeur selon la revendication 1, **caractérisé en ce que** le manchon-trayeur (3) est fabriqué d'une seule pièce.

3. Système de manchon-trayeur selon l'une des revendications 1 et 2, **caractérisé en ce que** le manchon-trayeur (3) est fabriqué dans une matière de type caoutchouc.

4. Système de manchon-trayeur selon l'une des précédentes revendications, **caractérisé en ce que** la partie inférieure extrême (8) du manchon-trayeur (3) comprend deux parties de sortie assimilables à des flexibles (10, 11), où chaque partie de sortie forme une desdits passages de sortie.

5. Système de manchon-trayeur selon l'une des revendications précédentes, **caractérisé par** un système de vanne (12) qui est agencé pour assurer au moins un état sensiblement fermé ou un état sensiblement ouvert d'au moins un desdits passages de sortie (10, 11).

6. Système de manchon-trayeur selon la revendication 5, **caractérisé par** des moyens qui sont agencés pour permettre la commande automatique du système de vanne (12) dans l'un desdits états.

7. Système de manchon-trayeur selon l'une des revendications 5 et 6, **caractérisé en ce que** le système de vanne (12) comprend une vanne (24, 25) qui est agencée pour ouvrir le passage de sortie en question au moins lorsque la pression dans l'espace intérieur (6) dépasse sensiblement la pression dans le passage de sortie (10, 11) en question.

8. Système de manchon-trayeur selon l'une des revendications 5 et 6, **caractérisé en ce que** le système de vanne (12) comprend une vanne qui a un corps de vanne (14, 15) pour chaque passage de sortie (10, 11) et qui est agencée pour pouvoir pivoter à partir d'une position de repos, où les deux corps de vanne (14, 15) sont situés à une distance d'un siège de vanne du passage de sortie correspondant (10, 11).

9. Système de manchon-trayeur selon la revendication 8, **caractérisé en ce que** la vanne (14, 15) est agencée pour pouvoir pivoter à partir de ladite position de repos contre l'action d'une force de ressort de rappel.

10. Système de manchon-trayeur selon la revendication 9, **caractérisé en ce qu'**un desdits corps de vanne (14, 15) est agencé pour être mis en butée contre l'un desdits sièges de vanne, où le passage de sortie (10, 11) associé à l'autre siège de vanne est ouvert.

11. Système de manchon-trayeur selon l'une des revendications 5 à 10, **caractérisé en ce que** le système de vanne comprend un élément (13) qui peut être inséré dans l'espace intérieur (6) en butée contre un élément d'arrêt (16) à la partie inférieure extrême (8).

12. Système de manchon-trayeur selon l'une des revendications 5 et 6, **caractérisé par** au moins une partie du conduit flexible (10, 11), qui part de ou forme le passage de sortie en question, où le système de vanne (12) est agencé pour assurer ledit état sensiblement fermé par une compression de la partie du conduit (10, 11) en question.

13. Système de manchon-trayeur selon la revendication 12, **caractérisé en ce que** ladite partie de conduit (10, 11) est enfermée dans une chambre (17, 18) et **en ce que** le système de vanne (12) comprend des moyens (19, 20) qui sont agencés pour faire monter le niveau de pression dans ladite chambre (17, 18) au-dessus du niveau de pression dans le passage de sortie (10, 11) de façon à produire ladite compression.

14. Système de manchon-trayeur selon la revendication 12, **caractérisé en ce que** le système de vanne (12) comprend un élément en deux parties (22) qui sont disposées de côtés différents de la partie de conduit flexible (10, 11) et dont au moins une partie (22) est déplaçable vers l'autre partie (22) de telle sorte que la partie de conduit flexible soit comprimée.

15. Système de manchon-trayeur selon la revendication 14, **caractérisé en ce qu'**au moins une des parties (22) comprend un alliage à déformation réversible par la chaleur ("memory metal") et **en ce que** le système de vanne (12) comprend un élément chauffant (23) qui est agencé pour assurer ledit déplacement en chauffant l'alliage à déformation réversible par la chaleur.

16. Moule pour la fabrication d'un manchon-trayeur (3) qui définit un espace intérieur (6) et comprend une partie supérieure extrême (7), avec un passage d'entrée (9) qui est disposé vers l'espace intérieur, et une partie inférieure extrême (8), qui forme deux passages de sortie (10, 11) qui partent de l'espace intérieur, **caractérisé en ce que** le moule comprend
un moule extérieur (30) avec une cavité qui correspond au contour extérieur du gobelet-trayeur,
une première partie de noyau (31) dont le contour extérieur correspond au contour de l'espace intérieur (6) et
deux autres parties de noyau (32, 33) dont chacune correspond au contour d'un des passages de sortie (10, 11).

17. Moule selon la revendication 16, **caractérisé en ce que** deux autres parties de noyau (32, 33) sont agencées pour pouvoir se raccorder à la première partie de noyau (31).

18. Moule selon la revendication 17, **caractérisé en ce que** deux autres parties de noyau (32, 33) peuvent être insérées dans un évidement correspondant (34, 35) de la première partie de noyau (31).

19. Procédé de fabrication d'un manchon-trayeur qui définit un espace intérieur et comprend une partie supérieure extrême, avec un passage d'entrée qui est disposé vers l'espace intérieur, et une partie inférieure extrême, qui forme deux passages de sortie qui partent de l'espace intérieur, comprenant les étapes :
assemblage d'un moule qui comprend un moule extérieur, avec une cavité qui correspond au contour extérieur du manchon-trayeur, une première partie de noyau, avec un contour extérieur qui correspond au contour de l'espace intérieur, et deux autres parties de noyau, dont chacune correspond au contour extérieur d'un des passages de sortie,
injection d'une matière de type caoutchouc dans le moule, et
démontage du moule et enlèvement du manchon-trayeur, **caractérisé en ce que** la première partie de noyau est tirée dans un premier sens et les deux autres parties de noyau sont tirées dans un second sens sensiblement opposé.
